# EUROPÄISCHE PATENTANMELDUNG

(11) **EP 0 721 079 A1**
(43) Veröffentlichungstag der Anmeldung: **10.07.1996**
(21) Anmeldenummer: 95119695.5
(22) Anmeldetag: 14.12.1995
(51) Int. Cl.: F16J 15/34

(54) **Gleitring in Verbundbauweise einer Gleitringdichtung**

(30) Priorität: 04.01.1995 DE 29500111 U
(71) Anmelder: FEODOR BURGMANN DICHTUNGSWERKE GmbH & Co., D-82515 Wolfratshausen (DE)
(72) Erfinder: Schrüfer, Andreas, D-82515 Wolfratshausen (DE); Steigenberger, Georg, D-82541 Holzhausen (DE); Zeus, Dieter, Dr. Ing., D-82057 Icking (DE)
(74) Vertreter: Schmidt, Horst, Dr.

(57) **Zusammenfassung**

Ein Gleitring (5) in Verbundbauweise einer Gleitringdichtung mit einem Basisring (11) und einer längs dessen äusseren Umfanges aufgeschrumpften Ringbandage (13) zur radialen und umfänglichen Abstützung des Basisringes wird beschrieben. Die Ringbandage (13) ist ein wenigstens in Umfangsrichtung in einem Matrixmaterial eingebettete Verstärkungsfasern umfassender Verbundkörper mit einem Wärmeausdehnungskoeffizienten, der kleiner oder annähernd gleich demjenigen des Materials des Basisringes (11) ist.

## Beschreibung

Die Erfindung betrifft einen Gleitring in Verbundbauweise einer Gleitringdichtung mit einem Basisring und einer längs dessen äusseren Umfang aufgeschrumpften Ringbandage zur radialen und umfänglichen Abstützung des Basisringes.

Die Erfindung bezieht sich insbesondere auf Gleitringe aus spröden Werkstoffen, wie Siliciumcarbid (SiC), bei denen eine auf die äussere Umfangsfläche des Gleitringes aufgeschrumpfte Ringbandage dazu dient, einerseits die mechanische Belastbarkeit des Gleitringes zu erhöhen und andererseits eine punktförmige Drehmomenteneinleitung zu ermöglichen. Bei bekannten Anordnungen mit einem Basisring aus SiC sind Ringbandagen aus metallischem Werkstoff, wie Stahl, vorgesehen, d.h. die bekannten Verbund-Gleitringe umfassen Materialien mit einem 5- bis 10-fach unterschiedlichen Wärmeausdehnungskoeffizienten mit entsprechendem temperaturabhängigem Einfluss auf die zwischen Basisring und Ringbandage beim Betrieb auftretenden Schrumpfspannungen. Bei sich ändernden Betriebstemperaturen können daher die nach dem Aufschrumpfen der Ringbandage plangeläppten Stirnflächen des Basisringes Verformungen aufgrund der sich ändernden radialen und umfänglichen Spannungen zwischen Basisring und Ringbandage erfahren. Insbesondere kann es zu einer Abnahme der Schrumpfspannungen bei höheren Betriebstemperaturen kommen, was eine konkave Verformung der Stirnflächen des Basisringes zur Folge hat und zu einer linienförmigen Eingriffnahme mit dem Gegenring und damit erhöhtem Verschleiss führen kann. Ausserdem wird die Konfiguration des Dichtspaltes zwischen den zusammenwirkenden Gleitringen in unkalkulierbarer Weise verändert, was zu erhöhter Leckage führen kann.

Der Erfindung liegt die Aufgabe zugrunde, einen Gleitring in Verbundbauweise der eingangs erwähnten Gattung zu schaffen, der im Bereich der zu erwartenden Betriebstemperaturen durch das mechanisch-thermische Verhalten der Ringbandage in seinem Betriebsverhalten nicht oder nur in tolerierbarer Weise beeinflusst wird.

Diese Aufgabe wird erfindungsgemäss durch die Merkmale im kennzeichnenden Teil des Anspruches 1 gelöst. Erfindungsgemäss ist somit die Ringbandage ein Bauteil aus einem faserverstärkten Verbundwerkstoff mit ähnlichem Wärmeausdehnungsverhalten wie das des Basisringes. Insbesondere kann die Ringbandage in Verbindung mit einem Basisring aus SiC in einer Kunststoff- oder Kohlenstoffmatrix eingebettete unidirektional verlaufende Kohlenstoff- oder SiC-Fasern umfassen. Die Fasern schaffen die erforderliche radiale und umfängliche Verstärkung, während andererseits ihr Wärmeausdehnungsverhalten ebenso wie das des Matrixmaterials weitgehend dem von SiC entspricht. Temperaturänderungen während des Betriebes des Verbund-Gleitringes rufen daher gleiche oder annähernd gleiche Formänderungen an der Ringbandage wie am Basisring hervor, d.h. im Idealfall verhält sich die Anordnung aus Ringbandage und Basisring wie ein einteiliges homogenes Bauteil. Temperaturbedingte unterschiedliche Schrumpfspannungen können auf diese Weise wirksam vermieden werden und damit auch die beschriebenen nachteiligen Auswirkungen auf das Betriebsverhalten der mit solchen Gleitringen ausgestatteten Gleitringdichtungen.

Die erfindungsgemässe Ringbandage wird ebenso wie die bislang verwendeten Ringbandagen aus metallischem Werkstoff als separates Teil passungsgerecht gefertigt und kann nach bekannten Techniken auf einen vorgefertigten Basisring aufgeschrumpft werden. Für das Aufschrumpfen wird jedoch statt einer Erweiterung der Bohrung der Ringbandage durch Erwärmung eine Reduzierung der Abmessung des Basisringes durch Abkühlung bis auf ein Mass bevorzugt, dass die Ringbandage auf den Basisring aufgeschoben werden kann.

Ringbandagen nach der Erfindung aus faserverstärktem Verbundwerkstoff können nach bekannten Fertigungstechniken hergestellt werden. Für die bevorzugte Ausbildung der Ringbandage aus kohlefaserverstärktem Kohlenstoff werden Kohlenstoffasern mit einem geeigneten Kunststoff-Matrixmaterial, wie Phenol- oder Epoxyharz, imprägniert, um einen entsprechend bemessenen Dorn bis zu einer geeigneten Dicke gewickelt, und wird anschliessend ein Karbonisierungsglühen in einer Inertgasatmosphäre durchgeführt, um eine Umwandlung des Matrixmaterials in einen Kohlenstoff mit einer bestimmten Porosität zu bewirken. Durch Nachverdichtung kann, wenn erwünscht, die Porosität auf ein geeignetes Mass herabgesetzt werden. Im übrigen ist das Herstellungsverfahren von kohlefaserverstärktem Kohlenstoff dem Fachmann bekannt und braucht nicht näher erläutert zu werden.

Gemäss einer Weiterbildung der Erfindung kann zur Erhöhung der Korrosionsbeständigkeit einer Ringbandage mit Kohlenstoffmatrix unter gleichzeitiger Verbesserung von deren Wärmeleitfähigkeit das Kohlenstoffmaterial wenigstens nahe der freiliegenden äusseren Oberflächen der Ringbandage in SiC z.B. mittels chemischer Dampfinfiltration umgewandelt werden. Näheres zu diesem Verfahren kann dem Artikel "Ceramic Composites by Chemical Vapour Infiltration" von Roman und Gerretsen, Centre of Technical Ceramics, P.O. Box 595, NL-5600 Eindhoven, entnommen werden. Anstelle davon könnten die freiliegenden Oberflächen der Ringbandage auch mit einer SiC-Beschichtung versehen werden.

Die Erfindung schafft einen Gleitring in Verbundbauweise, bei dem zwischen Ringbandage und Gleitring eine kraftschlüssige Verbindung besteht, die die Übertragung hoher Drehmomente erlaubt, während gleichzeitig die Drehmomenteneinleitung in die Ringbandage auf formschlüssige Weise erfolgen kann, so dass Kerbeffekte am empfindlichen Basisring aus sprödem Material vermieden werden können. Aufgrund der erfindungsgemässen Materialkombination verformen sich unter Temperaturänderungen die Ringbandage als auch der Basisring gleichartig. Eine vorgegebene Konfiguration des Verbundgleitringes bleibt daher bei Temperaturänderung im wesentlichen erhalten.

Gemäss einer anderen Weiterbildung der Erfindung kann die Ringbandage zu einem Trägergehäuse ausgebildet sein, welches gleichzeitig die beschriebene verstärkende Funktion auf den Basisring ausübt und das Mittel zur Montage des Gleitringes an einem Bauteil, z.B. Gehäuse, bildet.

Die Erfindung wird nachfolgend anhand von Ausführungsformen und der Zeichnung näher erläutert. Es zeigen:
Fig. 1 in fragmentarischer längsgeschnittener Ansicht eine Gleitringdichtung mit einem Verbundgleitring gemäss einer Ausführungsform der Erfindung nach Montage am Einsatzort, und
Fig. 2 in einer Ansicht ähnlich Fig. 1 eine Gleitringdichtung mit einem Verbundgleitring gemäss einer anderen Ausführungsform der Erfindung.

In der Zeichnung ist mit 1 das Gehäuse einer Maschine oder Vorrichtung mit einer Bohrung 2 bezeichnet, durch die eine Welle 3 hindurchgeführt ist. Zur Abdichtung der Welle 3 gegenüber dem Gehäuse 1 ist im Bereich der Bohrung 2 eine Gleitringdichtung, bestehend aus einem drehfest gegenüber dem Gehäuse 1 gehaltenen Gleitring 4 und einem damit zusammenwirkenden zur gemeinsamen Drehung mit der Welle 3 gehaltenen Gleitring, vorgesehen, der das allgemeine Bezugszeichen 5 trägt. Der drehfeste Gleitring 4 kann über eine geeignete Vorspanneinrichtung 6 in Gestalt z.B. einer Vielzahl von an einem gegenüber dem Gehäuse 1 fixierten Widerlagerteil 9 einerends abgestützten Federn, deren andere Enden sich am Gleitring 4 abstützen, gegen den rotierenden Gleitring 5 vorgespannt sein, wobei der drehfeste Gleitring 4 gegenüber dem Gehäuse 1 axial beweglich ist. Der drehfeste Gleitring 4 kann aus irgendeinem geeigneten Material, wie Stahl, bestehen.

Der rotierende Gleitring 5 kann auf einer auf der Welle 3 aufgesetzten Büchse 8 angeordnet und dagegen durch eine geeignete Dichtungseinrichtung, z.B. in Gestalt von O-Ringen 10, abgedichtet sein.

Der vorbeschriebene Aufbau einer Gleitringdichtung ist grundsätzlich bekannt. Eine nähere Erläuterung erübrigt sich daher.

Der rotierende Gleitring 5 stellt erfindungsgemäss ein Verbundbauteil dar, bestehend aus einem Basisring 11 und einer Ringbandage 13, die auf die äussere Umfangsfläche 12 des Basisringes 11 nach bekannten Techniken aufgeschrumpft ist. Als Material für den Basisring 11 wird Siliciumcarbid (SiC) bevorzugt, doch können auch andere geeignete Materialien mit verschleissminimierender Eigenschaft, wie Wolframcarbid oder Graphit, vorgesehen werden.

Die Ringbandage 13 ist ferner als faserverstärkter Verbundwerkstoff mit einem Wärmeausdehungsverhalten ausgebildet, das gleich oder annähernd gleich dem des Materials des Basisringes 11 ist. Bei Verwendung von SiC als Material für den Basisring 11 wird ein faserverstärkter Verbundwerkstoff, bestehend aus in einem geeigneten Matrixmaterial eingebetteten Kohlenstoff- oder SiC-Fasern oder einer Kombination dieser Fasermaterialien, bevorzugt. Vorzugsweise verlaufen die Verstärkungsfasern nur in Umfangsrichtung der Ringbandage 13, so dass der Basisring 11 durch die Ringbandage 13 im wesentlichen radial sowie umfänglich abgestützt wird.

Obschon andere geeignete Matrixmaterialien für den Verbundwerkstoff verwendet werden können, werden hierfür Kunststoffe, wie Epoxy- oder Phenolharze, und insbesondere Kohlenstoff bevorzugt. Kohlefaserverstärkte Epoxy- oder Phenolharz-Verbundwerkstoffe sowie kohlefaserverstärkte Kohlenstoff-Verbundwerkstoffe können nach bekannten Wickelverfahren hergestellt werden. Kohlefaserverstärkte Kohlenstoffe können ferner nach der eingangs erwähnten chemischen Dampfinfiltration längs der freiliegenden Oberflächen der Ringbandage 13 zur Erzielung einer verbesserten Korrosionsbeständigkeit und Wärmeleitfähigkeit behandelt sein.

Die vorbeschriebenen Materialkombinationen bewirken ein Wärmeausdehnungsverhalten der Ringbandage 13 und des Basisringes 11, das vorteilhafterweise für beide Teile im wesentlichen gleich ist. Die Erfindung ist jedoch darauf nicht beschränkt. Vielmehr kann für die Ringbandage 13 auch ein Verbundwerkstoff mit einem Wärmeausdehnungskoeffizienten vorgesehen werden, der kleiner als der des Materials des Basisringes 11 ist. Unter diesen Umständen würde eine Erhöhung der Temperatur beim Betrieb der Gleitringdichtung zu einer festeren Verbindung zwischen Ringbandage 13 und Basisring 11 führen. Eine daraus ggf. resultierende konvexe Verformung der Stirnfläche des Basisringes 11 würde hinsichtlich der Abdichtungsverhältnisse im Dichtspalt 7 zwischen den zusammenwirkenden Gleitringen 4, 5 weniger nachteilig als eine konkave Verformung der Stirnflächen sein, da hierbei eine geringere Gefahr für eine kantenmässige Eingriffnahme zwischen den Gleitringen 4, 5 sowie für eine erhöhte Leckage wegen Öffnens des Dichtspaltes 7 besteht.

### Beispiel

Eine kohlefaserverstärkte Verbund-Ringbandage 13 mit Kohlenstoffmatrix kann einen Gehalt an unidirektional verlaufenden Kohlefasern zwischen 10 und 25 %, eingebettet in einer Kohlenstoffmatrix, haben, deren Porosität zwischen 10 und 45 %, vorzugsweise 10 und 20 %, liegen kann. Die Matrix kann 30 bis 50 Stunden einer chemischen Dampfinfiltration zur Erhöhung der Zugfestigkeit, Korrosionsbeständigkeit und Verbesserung der Wärmeleitfähigkeit unterzogen werden. Das erhaltene Produkt zeigt eine gute mechanische Bearbeitbarkeit und ermöglicht eine problemlose Montage durch Aufschrumpfen auf den Basisring 11. Ein mit einer derartigen Ringbandage 13 und einem Basisring 11 aus SiC ausgestatteter Gleitring zeigte im Betrieb bei zunehmender Drehzahl praktisch keine Anderung der Leckage und wies eine hohe Lebensdauer auf. Dagegen stieg bei einem Verbundgleitring mit einem SiC-Basisring mit aufgeschrumpfter Ringbandage aus Metall die Leckage mit zunehmender Drehzahl stetig an, wobei der Dichtspalt 7 eine A-förmige Konfiguration annahm. Auch wurde vorzeitiger Verschleiss wegen kantenmassiger Eingriffnahme zwischen den Dichtflächen festgestellt.

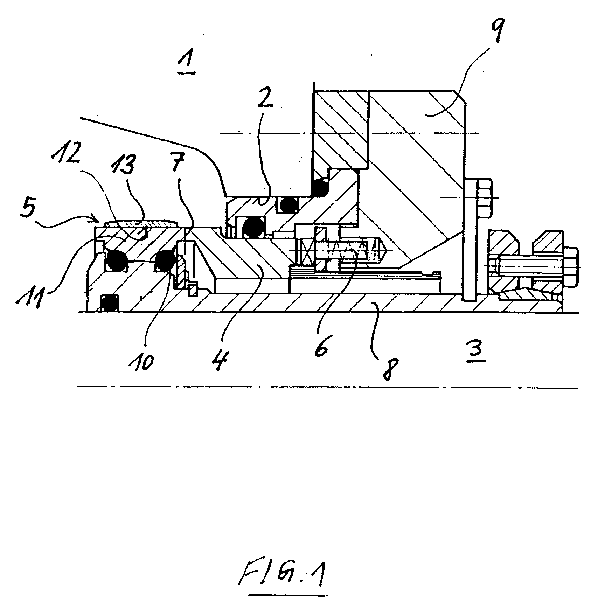

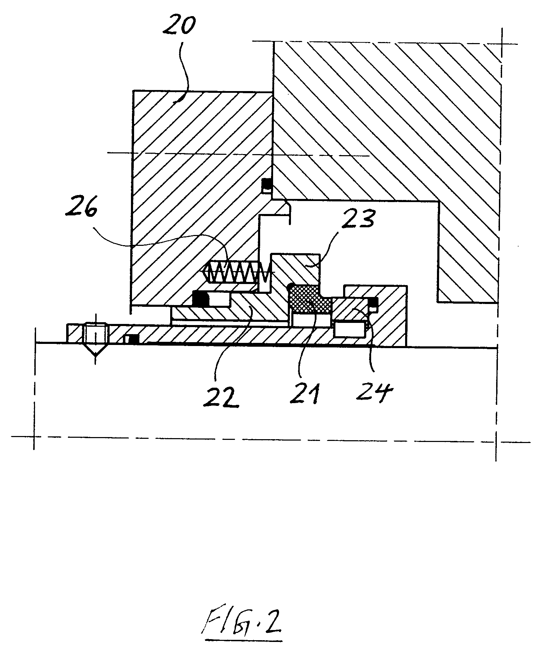

Während bei der vorbeschriebenen und in Fig. 1 gezeigten Ausführungsform der Verbundgleitring der rotierende Gleitring der Gleitringdichtung darstellt, ist bei der weiteren in Fig. 2 gezeigten Ausführungsform der Erfindung der Verbundgleitring der drehfest gegenüber einem Gehäuse 20 gehaltene Gleitring, der das allgemeine Bezugszeichen 25 trägt. Der Basisring 21 ist in einem ringförmigen Trägergehäuse 22 aufgenommen, das mit einem rohrförmigen erweiterten Abschnitt 23 den Basisring 21 aussen umfänglich umgibt und auf dem Basisring 21 analog zu der Verbindung zwischen der Ringbandage 13 und dem Basisring 11 der vorbeschriebenen ersten Ausführungsform aufgechrumpft ist. Das Trägergehäuse 22 betsteht aus faserverstärktem Verbundwerkstoff mit einem Wärmeausdehnungsverhalten ausgebildet, das dem des Basisringes 21 im wesentlichen gleichkommt. Auch können dieselben Materialien und Materialkombinationen, wie bei der ersten Ausführungsform der Erfindung, für das Trägergehäuse 22 bzw. den Basisring 21 verwendet werden, so dass bezüglich weiterer Details auf Fig. 1 mit zugehöriger Beschreibung verwiesen werden kann.

Das Trägergehäuse 22 der zweiten Ausführungsform der Erfindung ermöglicht gleichzeitig die Montage des Gleitringes 25 in der Bohrung des abzudichtenden Gehäuses 20. Dabei kann vorgesehen sein, dass eine Vorspanneinrichtung 26 in Gestalt z.B. einer Vielzahl umfänglich verteilter Schraubenfedern sich einerends am Gehäuse 20 und anderenends am Trägergehäuse 22 aus Verbundwerkstoff abstützt, um den Basisring 21 gegen den rotierenden Gleitring 24 vorzuspannen.

## Patentansprüche

1. Gleitring in Verbundbauweise einer Gleitringdichtung, mit einem Basisring und einer längs dessen äusseren Umfanges aufgeschrumpften Ringbandage zur radialen und umfänglichen Abstützung des Basisringes, dadurch gekennzeichnet, dass die Ringbandage (13;22,23) als wenigstens in Umfangsrichtung in einem Matrixmaterial eingebettete Verstärkungsfasern umfassender Verbundkörper mit einem Wärmeausdehnungskoeffizienten kleiner oder annähernd gleich demjenigen des Materials des Basisringes (11,21) ausgebildet ist.

2. Gleitring nach Anspruch 1, dadurch gekennzeichnet, dass der Verbundkörper nur unidirektional verlaufende Verstärkungsfasern umfasst.

3. Gleitring nach Anspruch 1 oder 2, dadurch gekennzeichnet, dass die Verstärkungsfasern Kohlefasern umfassen.

4. Gleitring nach Anspruch 1 oder 2, dadurch gekennzeichnet, dass die Verstärkungsfasern Siliciumcarbidfasern umfassen.

5. Gleitring nach einem der vorhergehenden Ansprüche, dadurch gekennzeichnet, dass das Matrixmaterial der Ringbandage (13;22,23) ein die Gruppe der Epoxy- und Phenolharze umfassendes Kunststoffmaterial ist.

6. Gleitring nach einem der Ansprüche 1 bis 4 , dadurch gekennzeichnet, dass das Matrixmaterial der Ringbandage (13;22,23) ein Kohlenstoffmaterial ist.

7. Gleitring nach Anspruch 6, dadurch gekennzeichnet, dass das Kohlenstoffmaterial wenigstens im Bereich längs wenigstens eines Teiles der freiliegenden äusseren Oberflächen der Ringbandage (13,22,23) in Siliciumcarbid umgewandelt ist.

8. Gleitring nach Anspruch 6, dadurch gekennzeichnet, dass das Kohlenstoffmaterial längs wenigstens eines Teiles der freiliegenden äusseren Oberflächen der Ringbandage (13;22,23) mit Siliciumcarbid beschichtet ist.

9. Gleitring nach einem der vorhergehenden Ansprüche, dadurch gekennzeichnet, dass der Basisring (11,21) aus einem Siliciumcarbidmaterial besteht.

10. Gleitring nach einem der vorhergehenden Ansprüche, dadurch gekennzeichnet, dass die Ringbandage als Trägergehäuse (22,23) für den Basisring (21) ausgebildet ist.
